# FASCICULE DE BREVET EUROPEEN

(11) **EP 0 687 921 B1**
(45) Date de publication et mention de la délivrance du brevet: **24.10.2001**
(21) Numéro de dépôt: 95401368.6
(22) Date de dépôt: 13.06.1995
(51) Int. Cl.: G01S 3/74

(54) **Méthode et système de localisation d'équipements sol émetteurs à l'aide de satellites**
Verfahren und System zur Ortungsbestimmung von Bodenfunksendern mittels Satelliten
Method and system of localisation of ground transmitters using satellites

(30) Priorité: 16.06.1994 FR 9407383
(43) Date de publication de la demande: 20.12.1995
(73) Titulaire: ALCATEL, 75008 Paris (FR)
(72) Inventeur: Lenormand, Régis, F-31700 Blagnac (FR); Rigal, Christian, F-31100 Toulouse (FR); Favaro, Henri, F-31570 Lanta (FR); Villemur, Charles, F-31120 Portet-sur-Garonne (FR); Quignon, Thierry, F-31100 Toulouse (FR)
(74) Mandataire: Smith, Bradford Lee

(56) Documents cités:
- EP-A- 0 407 243
- EP-A- 0 632 286
- WO-A-87/07031
- US-A- 4 276 553
- PATENT ABSTRACTS OF JAPAN vol. 5 no. 21 (P-048) ,7 Février 1981 & JP-A-55 149065 (MITSUBISHI ELECTRIC CORP.) 20 Novembre 1980,
- PATENT ABSTRACTS OF JAPAN vol. 14 no. 564 (E-1013) ,14 Décembre 1990 & JP-A-02 244802 (MITSUBISHI ELECTRIC CORP.) 28 Septembre 1990,
- IEEE TRANSACTIONS ON ANTENNAS AND PROPAGATION, vol. AP-34, no. 3, Mars 1986 pages 276-280, SCHMIDT 'MULTIPLE EMITTER LOCATION AND SIGNAL PARAMETER ESTIMATION'

## Description

L'invention porte sur une méthode et un système pour localiser des équipements sol qui émettent des signaux vers un satellite géostationnaire, la localisation étant réalisée sur la base de l'identification des directions d'arrivée de tels signaux dans la zone de couverture du satellite.

Elle s'applique tout particulièrement aux systèmes spatiaux de télécommunications civiles mettant en oeuvre des satellites géostationnaires qui permettent de relayer des équipements sol émetteurs, comme ceux utilisés pour la diffusion de programmes de télévision ou encore ceux qui permettent d'établir des communications téléphoniques entre des terminaux fixes portables et mobiles.

De nombreux progrès ont été réalisés en matière de miniaturisation des équipements sol destinés à émettre des signaux vers les satellites géostationnaires. De tels équipements sont maintenant disponibles dans le commerce et sont connus sous l'acronyme "VSAT".

Les opérateurs des réseaux spatiaux de télécommunications civiles observent que des signaux perturbateurs sont émis depuis des équipements sol "sauvages" qui profitent frauduleusement des satellites des opérateurs.

Ces signaux perturbateurs viennent se mélanger ou même se superposer aux signaux de télécommunication reçus normalement par les satellites géostationnaires de tels réseaux spatiaux.

Aujourd'hui, on rencontre des situations où des satellites de tels réseaux spatiaux reçoivent des dizaines de signaux perturbateurs en plus des signaux utiles.

Il en résulte pour les opérateurs de ces réseaux, un préjudice financier important et pour les clients des opérateurs, une diminution de la qualité de la transmission du fait des interférences entre les signaux perturbateurs et les signaux utiles.

Il existe donc aujourd'hui un besoin, pour les opérateurs, d'éliminer ou au moins de réduire le nombre de ces signaux perturbateurs émis en direction et à destination des satellites géostationnaires de leurs réseaux spatiaux de télécommunications civiles.

A cet effet, il est envisager d'identifier, depuis chaque satellite géostationnaire, les directions d'arrivée des signaux perturbateurs dans la zone de couverture du satellite en vue de localiser, à partir de ces directions d'arrivée, les équipements sol qui les émettent et ensuite de faire enlever ces équipements.

Il est déjà connu des systèmes pour identifier les directions d'arrivée de signaux qui arrivent dans la zone de couverture d'un satellite parmi d'autres signaux utiles mais avec une puissance beaucoup plus élevée, de l'ordre de 20 à 25dB au dessus de la puissance des autres signaux utiles. En pratique, les signaux dont on cherche à identifier la direction d'arrivée sont discriminés des autres signaux par leur niveau de puissance.

Les réalisations connues jusqu'à présent pour identifier des directions d'arrivée des signaux sont basées sur l'utilisation de capteurs à couverture globale (isotrope sur la couverture) mis en place sur le satellite, le nombre de capteurs à prévoir dépendant du nombre de signaux dont on cherche à identifier la direction d'arrivée. Ainsi, pour identifier les directions d'arrivée de deux signaux, il faut prévoir cinq capteurs et pour dix signaux, il faut en prévoir vingt et un.

Un tel agencement tend à devenir très compliqué et encombrant dès que le nombre de capteurs augmente. A partir d'une dizaine de capteurs en service, on considère que le volume de calculs à effectuer induit une complexité trop importante qui est rédhibitoire pour sa mise en oeuvre au sein d'une charge utile embarquée sur un satellite géostationnaire.

Le document WO 87/07031 décrit une méthode et un système de localisation d'une source émettrice terrestre à partir d'un satellite géostationnaire par l'identification des directions d'arrivée des signaux émis par ladite source. Dans une réalisation préférée, le satellite est équipé d'une antenne directive, formant un faisceau fin, et la direction d'arrivée des signaux est déterminée par un balayage de l'angle de visée de ladite antenne, soit par un mouvement mécanique de l'attitude du satellite, soit par un balayage électronique ou mécanique dudit faisceau d'antenne.

Le document US 4 276 553 décrit un système similaire. Dans ces deux documents, la localisation est effectuée moyennant le balayage d'un seul faisceau sur la surface terrestre. Les signaux à localiser sont des signaux de balises, dont l'émission intentionnelle a pour but la localisation de la balise. C'est le cas par exemple d'une balise de détresse. Ces signaux ne sauraient être considérés comme des signaux perturbateurs.

Dans le contexte actuel, les signaux perturbateurs ont généralement des caractéristiques physiques assez proches des signaux de télécommunication utiles et, en tout cas, pas assez différentes de celles de ces derniers pour envisager de les discriminer à partir de leur niveau de puissance.

Le but de l'invention est de proposer une méthode pour localiser des équipements sol qui émettent, vers un satellite, des signaux ayant des caractéristiques semblables, notamment en ce qui concerne leur puissance, la localisation étant réalisée sur la base de l'identification des directions d'arrivée de tels signaux dans la zone de couverture du satellite.

A cet effet, l'invention a pour objet une méthode de localisation telle que décrite dans la revendication 1 et suivantes. L'invention propose également un équipement de localisation comprenant une antenne apte à mettre en oeuvre la méthode, un satellite comportant une telle antenne, et un système de localisation comportant un tel satellite.

Plus spécifiquement, la méthode de l'invention est caractérisée en ce que l'identification des directions d'arrivée des signaux est réalisée à partir d'un système d'antenne réseau à modules actifs et formation de faisceaux monté à bord du satellite, ce système étant commandé de telle manière à définir simultanément des faisceaux du diagramme de rayonnement de l'antenne qui se superposent avec un léger décalage, ces faisceaux superposés correspondant à l'illumination d'une zone d'analyse restreinte à l'intérieur de la zone de couverture du satellite, ce système étant associé en outre à un programme de traitement numérique qui identifie les directions d'arrivée des signaux qui sont reçus dans cette zone d'analyse.

Dans la formation de faisceaux, on élabore, à partir de signaux délivrés par des antennes élémentaires configurées en un réseau, un signal somme de tous ces signaux après les avoir pondérés par des coefficients appropriés.

Lorsqu'il existe une relation de phase entre les ondes incidentes captées par les antennes élémentaires, on peut montrer, qu'alors sous certaines conditions, le signal somme est le signal qui serait obtenu par l'antenne réseau formée des antennes élémentaires mais avec une loi d'illumination définie par les coefficients de pondération.

La formation de faisceaux par calcul consiste à exécuter numériquement cette sommation pondérée des signaux délivrés par les antennes élémentaires.

Par ailleurs, on réalise un balayage électronique par application d'un déphasage variable et contrôlé aux signaux délivrés par les antennes élémentaires de manière à produire un faisceau ou "lobe principal" dont la direction avec l'axe central du réseau forme un angle variable, modifié en fonction des besoins.

Une antenne réseau à formation de faisceaux par le calcul numérique est connue du document EP-A-407243.

En superposant de tels faisceaux (ou ouvertures de spot), il est possible de s'affranchir suffisamment des interférences des signaux arrivant autour de cette zone d'analyse, ces signaux étant reçus avec une atténuation proche de 20dB par rapport aux signaux arrivant dans l'ouverture du spot, ce qui permet d'appliquer ensuite un traitement numérique d'identification des directions d'arrivée de plusieurs signaux arrivant dans cette zone d'analyse. Par ailleurs, le léger décalage des faisceaux permet de récupérer des caractéristiques différentielles qui servent à la différenciation des signaux reçus dans la zone d'analyse.

Il est donc envisagé, selon l'invention, d'établir pour chaque satellite une cartographie sur laquelle sont reportés tous les équipements sol qui émettent des signaux arrivant dans la zone de couverture du satellite à partir des direction d'arrivée de ces signaux. En connaissant la localisation des équipements sol autorisés à émettre, les équipements sol émetteurs "sauvages" pourront d'abord être identifiés et ensuite localisés précisément au sol, par exemple à l'aide de goniomètres.

En pratique, il est nécessaire de disposer d'un nombre de formateurs de faisceaux plus grand que de signaux à discriminer à l'intérieur d'une zone d'analyse. Ce nombre est tel qu'il faut n+2 formateurs de faisceaux par axe d'un référentiel (en azimut et en élévation) pour discriminer n signaux différents.

Etant donné que le nombre d'émetteurs sol "sauvages" à localiser pour un satellite peut être relativement élevé, de l'ordre de plusieurs centaines, il n'est pas envisageable d'utiliser des centaines de formateurs de faisceaux à bord du satellite.

Selon un mode de réalisation avantageux de l'invention, le système est commandé de telle manière que la zone d'analyse est déplacée à l'intérieur de la zone de couverture pour balayer automatiquement toute la zone de couverture du satellite.

L'intérêt de l'invention est qu'elle n'augmente pas de façon significative la complexité de la charge utile embarquée sur le satellite géostationnaire, si celle-ci était prévue pour comporter une antenne réseau active à balayage électronique pour une mission de télécommunication. La mise en oeuvre de la fonction "localisation" nécessite simplement l'adjonction de formateurs de faisceaux dédiés à cette fonction, en parallèle à ceux de la mission de télécommunication et qui n'en dégradent pas les performances. Par une telle méthode, il est possible d'obtenir une résolution au sol assez importante, de l'ordre de 5 à 10 Kms.

L'invention est applicable à tous les types d'antennes actives, qu'il s'agisse de réseaux à rayonnement direct ou d'antennes dans lesquelles un réseau focal actif illumine un réflecteur.

L'invention s'étend à un système d'antenne réseau à modules actifs et formation de faisceaux, ce système étant sous la commande d'un programme qui est agencé de manière à définir simultanément des faisceaux du diagramme de rayonnement de l'antenne qui se superposent avec un léger décalage, ces faisceaux superposés correspondant à l'illumination d'une zone d'analyse restreinte à l'intérieur de la zone de couverture de l'antenne et à mettre en application un traitement numérique pour identifier les directions d'arrivée des signaux qui sont reçus dans cette zone d'analyse.

Elle s'étend encore à un satellite comprenant un tel système d'antenne ainsi qu'à un système pour localiser des équipements sols qui émettent des signaux vers un tel satellite mis en orbite géostationnaire, ce satellite étant en communication avec le sol pour fournir des données d'indication des directions d'arrivée de tels signaux dans la zone de couverture du système d'antenne du satellite.

Globalement, un tel système contribue à améliorer la qualité des liaisons de télécommunications du sol vers le satellite mis sur orbite géostationnaire, notamment au niveau du rapport gain sur température du satellite. L'amélioration qui peut être obtenue sur le facteur de mérite du satellite peut être chiffré sur la base de l'exemple d'une liaison de transmission en bande X, aux environs de 8-9 GHz, et d'un satellite dont la zone de couverture est typiquement de l'ordre du degré. Dans l'hypothèse d'un gain de 40 dB en bord de couverture pour l'antenne, il est possible d'obtenir un facteur de mérite gain sur température d'environ 10 dBK, avec une antenne active à réflecteur. Avec des capteurs isotropes sur la couverture terrestre, le rapport gain sur température du satellite serait dans les mêmes conditions que de -10 dBK environ.

D'autres caractéristiques et avantages de l'invention apparaîtront encore à la lecture de la description qui suit d'un exemple de réalisation de l'invention faite en référence aux dessins.

La figure 1 illustre le principe d'une charge utile d'un satellite de télécommunication comportant un système de localisation selon l'invention.

La figure 2 montre un diagramme d'une antenne réseau active associée à quatre formateurs de faisceaux selon l'invention.

La figure 3 illustre un mode de réalisation de l'antenne réseau.

La figure 4 montre le diagramme de la figure 3 sur lequel sont portés des signaux perturbateurs.

La figure 5 illustre les performances obtenues avec le système de localisation selon l'invention.

Selon l'invention, la charge utile d'un satellite géostationnaire comprend un système d'identification de direction d'arrivée de signaux qui sert à la localisation d'équipements qui émettent depuis le sol des signaux dans la zone de couverture du satellite, ce satellite étant normalement exploité à des fins de télécommunications.

Ce système d'identification est basé sur un système d'antenne à modules actifs et formateurs de faisceaux analogiques ou par le calcul numérique.

Le système d'antenne comprend une antenne réseau 1 constituée d'antennes élémentaires (un nombre limité de ces antennes élémentaires étant seulement représenté pour des raisons de clarté du dessin).

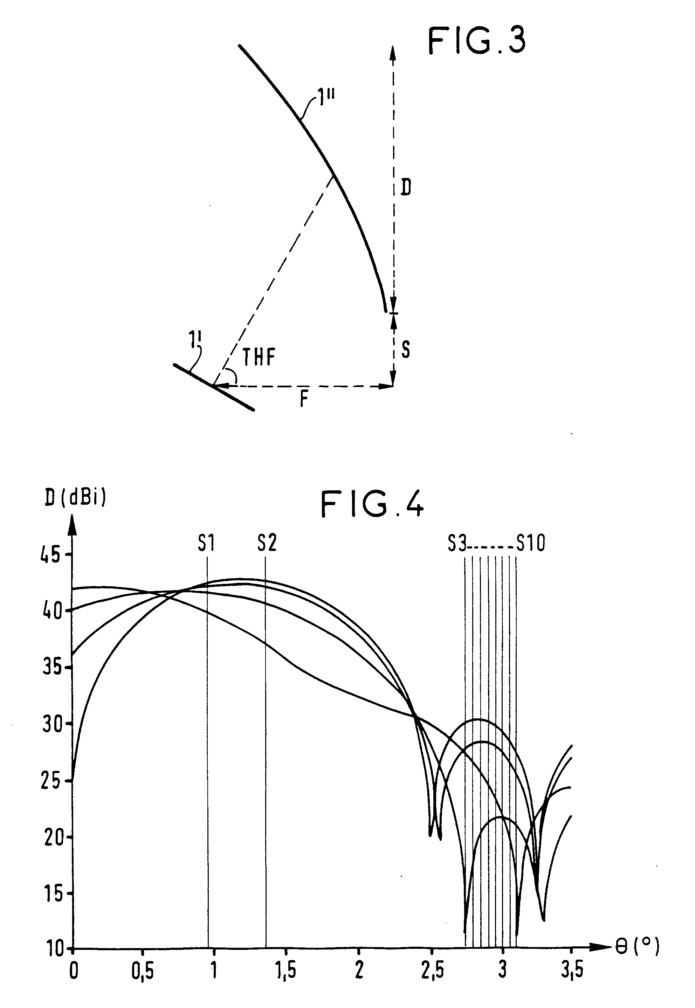

Un exemple d'antenne qui convient pour le système de localisation selon l'invention est montré schématiquement sur la figure 3. Dans cet exemple, le réseau actif 1' illumine un réflecteur 1". Cette antenne est constituée d'un réflecteur d'un diamètre D de 2,2m et décalé d'une distance S de 0,6m. La distance focale F est de 1,54m avec un angle de visée THF par rapport à la normale de 60°. Le réseau comprend 217 sources 1 de 1,2 lambda chacune.

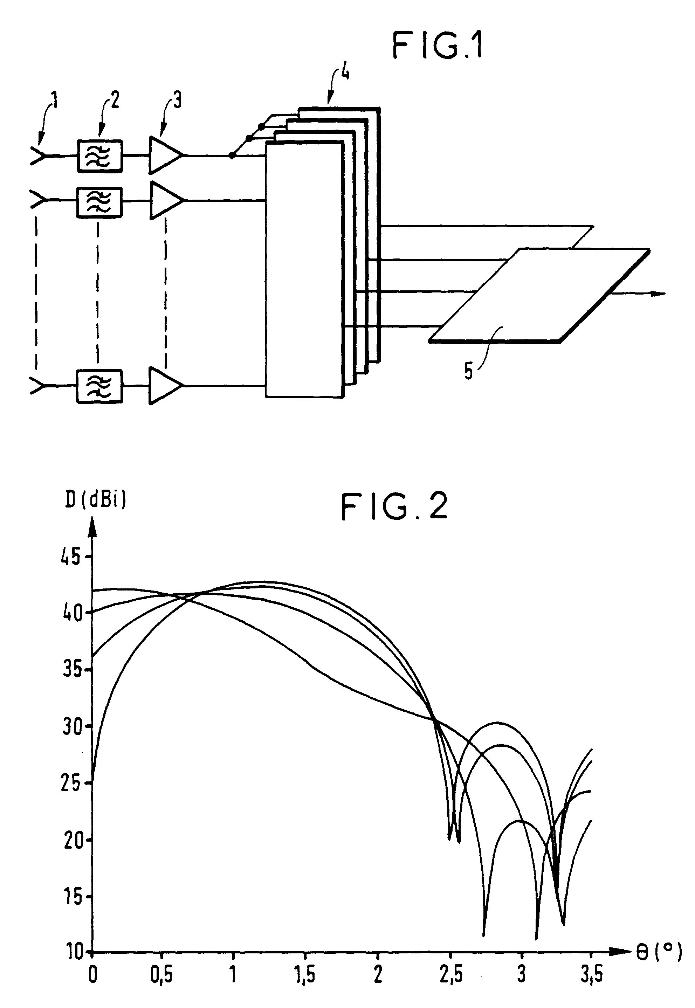

L'architecture de la charge utile est rappelée sur la figure 1.

A chaque antenne élémentaire 1 du réseau est associé un filtre 2 suivi d'un amplificateur faible bruit 3 classiques en soi. Dans le cas présent, le réseau d'antennes élémentaires fonctionne en réception pour la fonction localisation. Il est entendu que ce même réseau d'antennes élémentaires peut servir aussi en réception et/ou émission pour des fonctions de télécommunications assignées à la charge utile du satellite.

Les amplificateurs faible bruit 3 sont associés à des formateurs de faisceaux tels que 4 (quatre formateurs étant seulement représentés) qui sont dédiés à la fonction localisation, les formateurs de faisceaux étant reliés en parallèle aux sorties des amplificateurs 3.

Chaque formateur de faisceaux 4 comprend un réseau de modules actifs (non représenté), chaque module actif comprenant un déphaseur électronique et un atténuateur, à raison d'un module actif par antenne élémentaire 1. Chaque formateur de faisceaux produit en sortie un signal hyperfréquence résultant de la somme des signaux de sortie des modules actifs du formateur de faisceaux suivant une loi d'illumination qui correspond à des coefficients de pondération appliqués sur ces modules actifs.

Cette loi d'illumination est telle qu'elle définit un faisceau étroit dans le diagramme de rayonnement de l'antenne correspondant typiquement à l'ouverture d'un spot dont la direction de pointage dépend des coefficients de pondération.

Les signaux hyperfréquence formés en sortie des différents formateurs de faisceaux 4 sont ensuite numérisés en parallèle dans une unité de traitement 5 pour produire des signaux numériques en quadrature.

Cette unité de traitement 5 élabore des produits de covariance des signaux numériques en vue de former une matrice de covariance servant de base à un algorithme d'identification des directions d'arrivée de signaux reçus dans la zone de couverture de l'antenne. Des données représentatives des directions d'arrivée des signaux reçus par le satellite sont récupérées de l'unité de traitement 5 qui les envoie vers le sol pour servir à la localisation des équipements sol qui ont émis de tels signaux.

Selon l'invention, les jeux de coefficients de pondérations appliqués aux modules actifs des formateurs de faisceaux 4 sont choisis de telle façon à obtenir simultanément des faisceaux étroits du diagramme de rayonnement de l'antenne qui se superposent avec un léger décalage.

Comme visible sur la figure 2, quatre faisceaux, issus des quatre formateurs de faisceaux 4 de la figure 1, se superposent avec un léger décalage, les maxima des faisceaux étant décalés régulièrement d'une valeur angulaire très inférieure à la largeur d'un faisceau, par exemple de 0,3°.

Ces quatre faisceaux correspondent à l'illumination d'une zone d'analyse restreinte à l'intérieur de la zone de couverture de l'antenne. En fait, cette zone d'analyse correspond sensiblement à l'ouverture d'un faisceau.

Sur la figure 4, dix signaux S1-S10 de même amplitude, ayant une répartition de fréquence uniforme dans une bande de traitement de 40MHz sont montrés en relation avec les quatre faisceaux du diagramme de l'antenne. Du fait que les coefficients de pondération précités sont choisis de manière à obtenir une superposition des faisceaux, les signaux S3-S10 arrivant à l'extérieur de la zone d'analyse, sont reçus dans l'unité de traitement 5 avec une atténuation suffisante par rapport aux signaux S1-S2 pour permettre la discrimination des signaux S1 et S2.

L'algorithme d'identification de la direction d'arrivée des signaux reçus dans la zone d'analyse est connu sous le nom de "MUSIC". Cet algorithme est décrit dans le document IEEE TRANSACTIONS ON ANTENNAS AND PROPAGATION, VOL. AP. 34, N°3, MARCH 1986; "Multiple Emitter Location and Signal Parameter Estimation" de Ralph O. Schmidt. Cet algorithme est basé sur le traitement de la matrice de covariance des signaux reçus dont le principe est rappelé ci-après.

Après un premier traitement, les signaux sont classés par appartenance à l'un des deux sous-espaces propres du système: le sous-espace propre des signaux et le sous-espace propre du bruit. Le principe de la classification est basé dans un premier temps sur la recherche des valeurs propres du système, et ensuite sur le rangement de ces valeurs propres par rapport à un seuil de séparation.

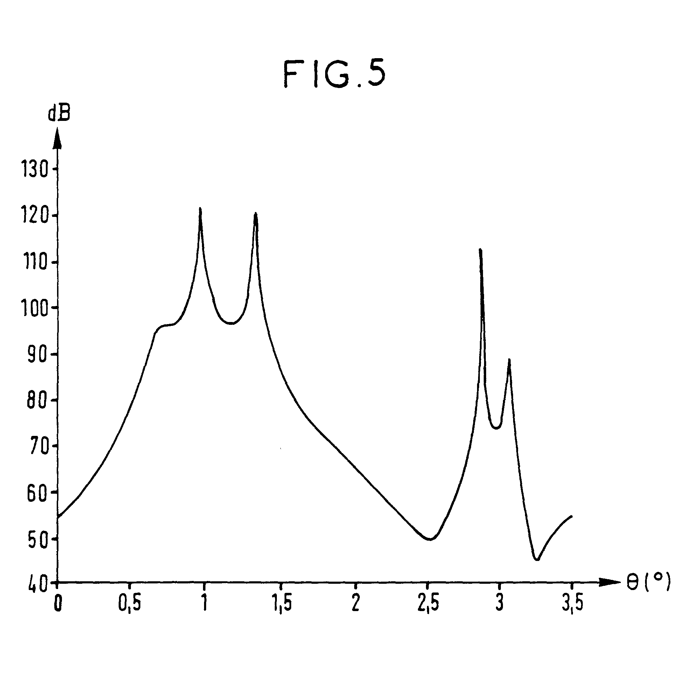

Les résultats obtenus en combinant le système d'antenne selon l'invention avec le traitement des signaux numériques selon l'algorithme "MUSIC" sont montrés sur la figure 5. L'axe des abscisses représente en degré, des valeurs d'estimateurs des directions d'arrivée des signaux reçus dans la zone d'analyse. On voit que les deux signaux Si et 52 arrivant dans la zone d'analyse ont été localisés sans biais.

Pour balayer toute la zone de couverture de l'antenne, le système d'antenne est agencé pour appliquer, suivant un programme préétabli, des jeux successifs de coefficients de pondération sur les formateurs de faisceaux (en fait les modules actifs de ceux-ci) de façon à déplacer la zone d'analyse à l'intérieur de la zone de couverture de sorte à obtenir, par des applications successives de l'algorithme "MUSIC" sur les zones d'analyse, les directions d'arrivée de tous les signaux arrivant dans la zone de couverture de l'antenne.

Pour identifier les directions d'arrivée de deux signaux différents dans la zone d'analyse avec l'algorithme "MUSIC", il faut mettre en oeuvre sept formateurs de faisceaux. En déplaçant, la zone d'analyse à l'intérieur de la zone de couverture de l'antenne, ces sept formateurs de faisceaux permettent quand même d'identifier les signaux arrivant dans toute la zone de couverture de l'antenne. On comprend donc qu'un nombre relativement restreint de formateurs de faisceaux suffit pour localiser plusieurs centaines d'émetteurs sol disséminés dans la zone de couverture de l'antenne.

## Revendications

1. Une méthode pour localiser des équipements sol qui émettent des signaux vers un satellite géostationnaire sur la base de l'identification des directions d'arrivée de tels signaux dans la zone de couverture du satellite, **caractérisée en ce que** l'identification des directions d'arrivée des signaux est réalisée à partir d'un système d'antenne à modules actifs et formation de faisceaux (4) monté à bord du satellite, ce système étant commandé de telle manière à définir simultanément des faisceaux du diagramme de rayonnement de l'antenne qui se superposent avec un léger décalage, ces faisceaux superposés correspondant à l'illumination d'une zone d'analyse restreinte à l'intérieur de la zone de couverture, ce système étant associé en outre à un programme de traitement numérique qui identifie les directions d'arrivée des signaux qui sont reçus dans cette zone d'analyse.

2. La méthode selon la revendication 1, dans laquelle le système est commandé de telle manière que la zone d'analyse est déplacée à l'intérieur de la zone de couverture pour balayer automatiquement toute la zone de couverture.

3. La méthode selon la revendication 2, dans laquelle les faisceaux se superposent avec un décalage angulaire entre maxima très inférieur à la largeur du faisceau.

4. Un système d'antenne réseau active à balayage électronique pour un satellite géostationnaire de télécommunications comprennent une pluralité d'antennes élémentaires (1), une pluralité de filtres (2), une pluralité d'amplificateurs faible bruit (3), et une pluralité de formateurs de faisceaux (4) ; **caractérisé en ce**
**qu'**au moins une partie de ladite pluralité de formateurs de faisceaux (4) sont dédiés à la fonction de la localisation d'émetteurs ce système étant sous la commande d'un programme (5) qui est agencé de manière à définir simultanément des faisceaux du diagramme de rayonnement de l'antenne qui se superposent avec un léger décalage, ces faisceaux superposés correspondant à l'illumination d'une zone d'analyse restreinte à l'intérieur de la zone de couverture et à mettre en application un traitement numérique pour identifier les directions d'arrivée des signaux qui sont reçus dans cette zone d'analyse et appliqués aux entrées desdits formateurs de faisceaux (4) dédiés à la fonction localisation.

5. Un satellite comprenant un système d'antenne selon la revendication 4.

6. Un système pour localiser des équipements sols qui émettent des signaux vers un satellite géostationnaire selon la revendication 5, ce satellite étant en communication avec le sol pour produire des données d'identification des directions d'arrivée de tels signaux dans la zone de couverture du satellite.

## Claims

1. A method of locating ground equipment that is transmitting signals to a geostationary satellite, the method being based on identifying the arrival directions of such signals within the coverage zone of the satellite, said method being **characterized in that** the arrival directions of the signals are identified by using a beam-forming active-module antenna system (4) on board the satellite, the system being controlled to define simultaneous beams in the radiation pattern of the antenna, the beams being superposed on one another with small offsets, the superposed beams corresponding to a limited analysis zone being illuminated within the coverage zone, the system further being associated with a digital processing program which identifies the arrival directions of the signals which are received in the analysis zone.

2. The method according to claim 1, in which the system is controlled such that the analysis zone is displaced within the coverage zone so as to scan the entire coverage zone automatically.

3. The method according to claim 2, in which the beams are superposed on one another with an angular offset between maxima that is much smaller than the width of the beam.

4. An electronic scanning active array antenna system for a geostationary telecommunications satellite comprising a plurality of individual antennas (1), a plurality of filters (2), a plurality of low-noise amplifiers (3), and a plurality of beam-formers (4); the system being **characterized in that** at least some of said plurality of beam-formers (4) are dedicated to the function of locating transmitters, the system being under the control of a program (5) which is organized firstly to define simultaneous beams in the radiation pattern of the antenna, the beams being superposed on one another with small offsets, the superposed beams corresponding to a limited analysis zone being illuminated within the coverage zone, and secondly to implement digital processing so as to identify the arrival directions of the signals which are received in the analysis zone and applied to the inputs of said beam-formers (4) dedicated to the locating function.

5. A satellite including an antenna system according to claim 4.

6. A system for locating ground equipment transmitting signals to a geostationary satellite according to claim 5, the satellite being in communication with the ground so as to produce data identifying the arrival directions of such signals within the coverage zone of the satellite.

## Patentansprüche

1. Verfahren zum Orten von Bodenausrüstungen, die Signale zu einem geostationärem Satelliten senden, auf der Basis der Identifikation der Ankunftsrichtungen solcher Signale im Abdeckungsbereich des Satelliten, **dadurch gekennzeichnet, dass** die Identifikation der Ankunftsrichtungen der Signale ausgehend von einem Gruppenantennensystem mit aktiven Modulen und Bündelbildung (4) durchgeführt wird, das an Bord des Satelliten angebracht ist, wobei dieses System derart gesteuert wird, dass gleichzeitig Bündel des Strahlungsdiagramms der Antenne definiert werden, die sich mit einer geringen Verschiebung überlagern, wobei diese überlagerten Bündel der Ausleuchtung eines eingeschränkten Analysebereichs im Inneren des Abdeckungsbereichs entsprechen, wobei dieses System außerdem mit einem digitalen Verarbeitungsprogramm verbunden ist, das die Ankunftsrichtungen der Signale identifiziert, die in diesem Analysebereich empfangen werden.

2. Verfahren nach Anspruch 1, bei welchem das System so gesteuert wird, dass der Analysebereich im Inneren des Abdeckungsbereichs verschoben wird, um automatisch den ganzen Abdeckungsbereich abzutasten.

3. Verfahren nach Anspruch 2, bei welchem sich die Bündel mit einer Winkelverschiebung zwischen den Maxima überlagern, die viel kleiner als die Breite des Bündels ist.

4. Aktives Gruppenantennensystem mit elektronischer Abtastung für einen geostationären Telekommunikationssatelliten, das eine Vielzahl von Elementarantennen (1), eine Vielzahl von Filtern (2), eine Vielzahl von rauscharmen Verstärkern (3) und eine Vielzahl von Bündelformern (4) umfasst; **dadurch gekennzeichnet, dass**
wenigstens ein Teil der Vielzahl von Bündelformern (4) für die Funktion der Ortung von Sendern zugeschnitten ist, wobei dieses System unter der Steuerung eines Programms (5) steht, das so gestaltet ist, dass gleichzeitig Bündel des Strahlungsdiagramms der Antenne definiert werden, die sich mit einer geringen Verschiebung überlagern, wobei diese überlagerten Bündel der Ausleuchtung eines eingeschränkten Analysebereichs im Inneren des Abdeckungsbereichs entsprechen, und dass eine digitale Verarbeitung angewendet wird, um die Ankunftsrichtungen der Signale zu identifizieren, die in diesem Analysebereich empfangen und auf Eingänge der Bündelformer (4) gegeben werden, die auf die Ortungsfunktion zugeschnitten sind.

5. Satellit, der ein Antennensystem nach Anspruch 4 umfasst.

6. System zum Orten von Bodenausrüstungen, die Signale zu einem geostationären Satelliten nach Anspruch 5 senden, wobei dieser Satellit mit dem Boden in Verbindung steht, um Daten zur Identifikation der Ankunftsrichtungen solcher Signale im Abdeckungsbereich des Satelliten zu erzeugen.
